# EUROPEAN PATENT APPLICATION

(11) **EP 1 349 331 A1**
(43) Date of publication of application: **01.10.2003**
(21) Application number: 02425198.5
(22) Date of filing: 29.03.2002
(51) Int. Cl.: H04L 12/56

(54) **Method for transmitting fixed and variable size data units within the same frame in a PMP system**

(71) Applicant: Siemens Information and Communication Networks S.p.A., 20126 Milano (IT)
(72) Inventor: Cavalli, Giulio, 20161 Milano (IT); Santacesaria, Claudio, 20139 Milano (IT)
(74) Representative: Giustini, Delio

(57) **Abstract**

In radio transmission systems with point-to-multipoint (PMP) topology a master station and one or several terminal stations are defined as well as a downstream channel from the master station to the terminal stations and an upstream channel from the terminal stations to the master station.

The system can be optimised in order to efficiently transport variable size or fixed size data units in the air interface. So far this two optimised system, fixed mode systems and variable mode systems, are incompatible each other.

The present invention defines a frame structure and scheduling rules for a PMP system that allows the coexistence of fixed mode terminal stations and variable mode terminal stations within the same frame.

In particular a preferred embodiment is defined with different regions within the downstream frame where only terminal stations belonging to one specific mode, fixed or variable, are addressed.

The invention discloses also a second embodiment where, in the same region, terminal stations belonging to both modes are addressed, but data units addressed to fixed mode terminal stations are scheduled before the data units addressed to variable mode terminal stations.

## Description

### FIELD OF THE INVENTION

The present invention relates particularly to point-to-multipoint radio network systems as well as to other transmission systems working on different physical media.

### BACKGROUND ART

In point-to-multipoint (PMP) systems, whatever physical medium is used, a master station and one or several terminal stations, also called terminals, are defined. While a particular embodiment of the present invention, applied to radio point-to-multipoint systems, will be shown and described, it should be understood that the present invention is not limited thereto since other embodiments may be made by those skilled in the art without departing from the ambit of the invention.

The transmissions from the master station to one or more terminal stations are made on one logical channel, also called "downstream channel", typically with time division multiplexing (TDM) approach.

The transmissions from the terminal stations to the master are made on another logical channel, also called "upstream channel" , typically with time division multiple access (TDMA) approach. The upstream is divided from the downstream channel by frequency division duplexing or by time division duplexing. That is the transmissions in upstream direction could be made either in a different frequency channel, or in the same frequency channel but in different time-intervals.

With other physical media, alternative duplexing mechanisms could be used.

Well known PMP systems operate according to two different methods with respect to allocation of portions of the channel, where the wording "channel" can identify either the downlink TDM or the uplink TDMA channel: the two mentioned methods are called fixed mode and variable mode.

In a fixed mode PMP system the data units exchanged among the master station and the terminal stations are fixed in size. The downstream and the upstream channels are optimised for the fixed size data units. In fixed mode systems data units comprise an header and a payload part. The payload part carries the useful information to exchange whereas the header is used to carry information related to the data unit itself. Both, the payload and the header are fixed in size. Accordingly in the header of a fixed data unit, no data unit length field is needed. The receiver side, the master station or a terminal station, knows in advance the length of the data unit because the data units always have the same length.

In a variable mode PMP system the data units exchanged between the master and the terminal stations are variable in size. This means that every data unit could have a different length. The receiver cannot know in advance the length of the data units but it can derive the length of each data unit from the header of the data unit, where such information is inserted in a proper field.

Fixed mode systems are optimised for carrying some types of traffic like for example ATM, while variable mode systems are optimised for carrying some other types, like for example IP. All types of traffic can be transported with inefficiencies with either system but traffic which is intrinsically based on fixed data units, like ATM, is more efficiently transported in a fixed mode system which, for example, saves the overhead of the non-required length field; on the other end a intrinsically variable data unit system, based for example on IP protocol, would pay in the fixed mode system a padding overhead for aligning segmented IP packets to an integer number of fixed size data units; in such an environment the overhead balance is in favour of variable data unit systems.

As an additional information, in a point-to-multipoint system, without distinction between a fixed mode system and a variable mode system, the frame contains a control zone, also called "map", which contains information about the structure of the frame. For example in a system with adaptive modulation, the map contains the pointers to the modulation regions. Other information within the map could be the length and the version of the map. The map is usually placed at the beginning of each frame, but this should not be considered as a limitation to the present invention, since other embodiments may be made by those skilled in the art without departing from the ambit of the invention.

### SCOPE AND SUMMERY OF THE INVENTION

Since the data unit header and the map of a variable and a fixed mode system are different, a fixed mode terminal cannot seamlessly interoperate with a variable mode master station and vice versa. The two systems are incompatible each other. The receiver has to know in advance the modality of the transmitter in order to decode the received data unit.

The present invention defines a system that permits the coexistence of variable and fixed data unit mode terminal stations within the same frame in a point-to-multipoint system.

The master station of this invention is able to address both fixed and variable mode terminal stations within the same channel and within the same frame, thus allowing a perfect coexistence of both types of terminals, keeping for each of them the related optimisation, and without paying any additional price in terms of overhead or performance. The coexistence within the same frame allows flexible scheduling without increasing latency and jitter, while the minimal impact on the air interface guarantees that no additional overhead jeopardises the advantages of both modes in their respective field.

Let us analyse in detail the inventive steps that can be adopted to achieve the technical solution to the described problem. Each of these steps can be applied alone or in conjunction with the others in which case the best advantages are exploited.

According to the present invention, one inventive step is to add, in the data unit header, both for the variable and for the fixed data unit, an information that indicates the mode, fixed or variable, of the data unit. This information indicates to the receiver the correct handling of the data unit, the format of the data unit itself and in particular the presence or not of the length field in the header. Since the header format is likely to be different for the fixed and the variable mode, it is important that the information is added in a way that can be used to identify which of the two modes the data unit belongs to. In a preferred embodiment such information is carried by a bit, positioned in the same place for fixed and variable data units, and a value of zero indicates a fixed data unit whereas a value of one indicates a variable data unit; of course the specific values and coding of this information are not limiting factors of this invention since several other ways of carrying this information can be identifies without departing from the ambit of the invention.

Another inventive step is to add an informational field to the broadcast zone of the frame, for example in the map, where said informational field identifies the mode of the frame, that is the mode of the master station. Even if some preferred embodiments are described later on, the method how this information is carried and where it is placed should not be considered as limitations to the present invention, since other embodiments may be made by those skilled in the art without departing from the ambit of the invention.

A terminal station, once it has recognised the mode of the system, reacts in the proper way depending on its operational mode, fixed or variable.

A fixed mode master, which transmits in the downstream channel fixed data units, can easily communicate with a fixed mode terminal. A variable mode terminal will be forced to transmit only fixed data units. The variable mode terminal recognises that the master is a fixed mode one from the information in the broadcast zone, and adapts itself to receive and transmit fixed data units with the proper header. For such behaviour the variable mode terminal can also be called a dual mode terminal.

Since the fixed mode terminal cannot transmit other than fixed data units, the variable mode master, in order to communicate with it, shall be capable of transmitting and receiving fixed data units with the proper header. In this sense, since in handles both fixed and variable mode terminals, the variable mode master can be called a dual mode master.

Some qualifying points of this invention are in the frame structure handled by the variable mode master in order to accommodate both fixed and variable mode terminals.

In a first embodiment, separate regions within the downstream frame address fixed and variable mode terminals. Regions are already present because the are used to accommodate different modulations in adaptive modulations systems, or different coding schemes. The map contains pointers to the exact starting position of the regions within the downstream frame and specifies the type of each region. With this invention the concept of the region is extended to comprise, as different regions, the fixed and the variable data units from fixed and from variable mode terminals. It should be understood that the present invention is not limited thereto by the number of the region types. In this particular embodiment a fixed mode terminal knows that possible data units addressed to it can be present only in particular regions. In those regions all the data units are fixed ones.

In a second embodiment, preferred by the Applicant, fixed and variable data units could be located in the same regions, with the constraint that the fixed data units are placed before the variable ones within the region. In this second embodiment a predefined pointer to fixed regions is not needed with benefits on the map size. A fixed mode terminal listens the first part of all the relevant regions and, if there are fixed data units, this terminal can detect them by the header field of the data units themselves until the fixed terminal finds the first variable data unit. At this point the above mentioned terminal cannot understand the length of this data unit, so it loses the rest of the region and stop interpreting the data until the beginning of the next region. The above mentioned fixed terminal restarts listening and trying to decode new fixed data units at the beginning of the following region.

For the uplink the master station will schedule and interpret variable data units in bursts dedicated to variable mode terminals and fixed data units in bursts dedicated to fixed mode terminals.

### BRIEF DESCRIPTION OF THE DRAWINGS

The invention, together with further objects and advantages thereof, may be understood with reference to the following description, taken in conjunction with the accompanying drawings and in which:
**Figure 1** shows the format of a fixed data unit;
**Figure 2** shows the format of a variable data unit;
**Figure 3** shows a possible frame structure with map and regions.

### DETAILED DESCRIPTION OF THE PREFERRED EMBODIMENT

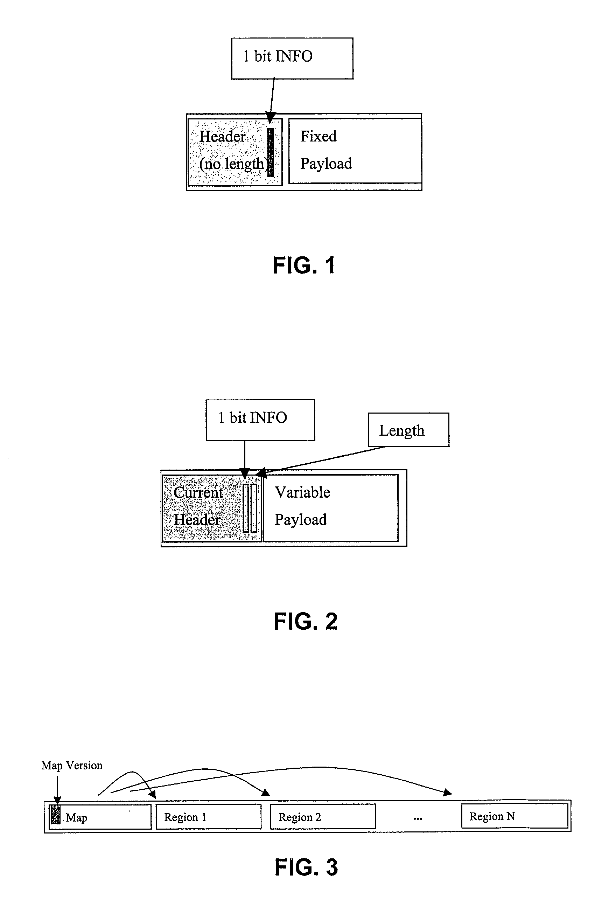

In the present invention the header of the data unit contains an indication of the nature of the data unit itself, whether it is fixed or variable size. This information could be a single bit field within the data unit header (Figure 1 and Figure 2).

Fixed data unit and variable data unit have a different header. Variable data unit, sketched in Figure 2, has an informational field of the data unit length that is not present in fixed data unit header. The above mentioned length field is required in variable data units in order to make the receiver able to decode the variable data unit. Moreover the receiver has to know where the following data unit starts.

The downstream frame of the preferred embodiment is sketched in Figure 3. The frame starts with the map where the pointers to the regions are present. An informational field is inserted in the map in order to inform the terminal stations about the mode of the master, that could be fixed or variable.

Let assume a fixed mode master. The map version within the map informs the terminals that the master is able to manage only fixed mode data units. The terminals, without distinction between fixed and variable mode terminals, are forced to transmit in the upstream channel fixed data units. The above mentioned master transmits in the downstream channel only fixed data units, regardless the addressed terminal station.

Let assume now a variable mode master. In this case the map version within the map informs the terminal stations that the master is able to manage both fixed and variable data units. In the upstream channel fixed mode terminals transmit fixed data units. Variable mode terminals transmit variable data units.

In a first preferred embodiment, in the downstream channel, the master schedules fixed data units for fixed mode terminals in dedicated regions. Fixed mode terminals single out these dedicated regions by the map at the beginning of the frame.

In a second preferred embodiment the master transmits fixed data units at the beginning of each downlink region and variable ones in the following of each region. Fixed mode terminals are able to detect fixed data units by the informational field within each data unit header that indicates if the data unit is fixed or variable one and can stop interpreting the data until the end of the region once identified the first variable size data unit.

For the uplink the master station will schedule and interpret variable data units in bursts dedicated to variable mode terminals and fixed data units in bursts dedicated to fixed mode terminals.

## Claims

1. Transmission method to be used in a transmission system comprising at least one master and one or more terminal stations which transmit towards said master station with a first transmission channel called upstream channel and receive from said master station with a second transmission channel called downstream channel where said downstream channel is organised in frames and each frame comprises at least a broadcast zone, also called map, **characterised in that** includes the steps of:
• allocating on said downstream channel and optionally on said upstream channel fixed size data units and variable size data units;
• including, in the data unit header, an information, optionally coded in a dedicated field or anyway transmitted somehow, identifying the nature, fixed or variable, of each data unit.

2. The method of claim 1, **characterized in that** includes the step of adding a field expressing the length of the data unit itself in the header of said variable size data unit.

3. The method of the previous claims **characterised by** the fact that includes the steps of dedicating specific regions of the downlink channel, identified by pointers within said map, to fixed size data units while dedicating other specific regions to variable size data units.

4. The method of claims 1 or 2, **characterised by** the fact that includes the step of transmitting fixed size data units at the beginning of each region of the downlink channel before the variable size data units that are transmitted afterwards.

5. The method of claim 3 or 4 including the step of allocating, on the uplink channel, bursts from fixed mode terminals including fixed size data units and bursts from variable mode terminals including variable size data units.

6. The method of one of the previous claims including the step of allocating in the map a mode information, possibly coded in a specific field called version number or map version or map ID, or anyway transmitted somehow, which identifies if the master is fixed mode, that is it supports only fixed size data units, or if the master is variable mode that is it supports both variable size and fixed size data units.

7. The method of claim 6 **characterized in that** includes the step of connecting to the system at least one variable mode terminal, also called dual mode terminal, which adapts itself to receive and transmit fixed size data units when said mode information states that the master station is fixed mode and also adapts itself to receive and transmit variable size data units when said mode information states that the master station is a variable mode station.

8. The method of one of the previous claims **characterized in that** includes the step of connecting to the system a fixed mode master station implementing only the handling of the fixed size data unit.

9. The method of one of the previous claims **characterized in that** includes the step of connecting to the system a variable mode master, also called dual mode master, capable of transmitting and receiving data both with fixed and variable data unit format.

10. The method of one of the previous claims including the step of connecting to the system at least one or more variable mode terminals and at least one or more fixed mode terminals coexisting in the same channel.

11. The method of claim 10 in which said variable mode terminals and said fixed mode terminals coexist in the same frame within said channel.

12. The method of claim 8 **characterized in that** includes the step of connecting to the system fixed mode terminal stations implementing only the handling of the fixed size data unit.

13. The method of claim 8 **characterized in that** includes the step of connecting to the system variable mode terminal stations implementing the handling of variable size data unit but using fixed size data units.

14. The method of claim 9 **characterized in that** includes the step of connecting to the system fixed mode terminal stations implementing only the handling of the fixed size data unit.

15. The method of claim 9 **characterized in that** includes the step of connecting to the system variable mode terminal stations implementing the handling of variable size data units.
